# EUROPEAN PATENT SPECIFICATION

(11) **EP 4 376 043 B1**
(45) Date of publication and mention of the grant of the patent: **25.03.2026**
(21) Application number: 22209208.2
(22) Date of filing: 23.11.2022
(51) Int. Cl.: H01H 85/00, H02B 1/18, H02B 13/02, H02B 13/035, H01H 85/20, H02B 13/045, H01H 33/56, H01H 33/12

(54) **FUSE LID HANDLE**
SICHERUNGSDECKELGRIFF
POIGNÉE DE COUVERCLE DE FUSIBLE

(43) Date of publication of application: 29.05.2024
(73) Proprietor: ABB SCHWEIZ AG, 5400 Baden (CH)
(72) Inventor: PETTERSEN, Terje, 3734 Skien (NO); WAAGE, Aleksander, 3723 Skien (NO)
(74) Representative: Kransell & Wennborg KB

(56) References cited:
- WO-A1-96/16425
- DE-A1- 102005 009 207
- KR-B1- 100 918 921

## Description

### TECHNICAL FIELD

The present disclosure relates to a handle of a fuse lid for sealing an opening in a canister for an electrical fuse.

### BACKGROUND

Medium voltage (MV) or high-voltage (HV) switchgear may include electrical fuses for fast breaking of the current in case of a fault, to protect the switching devices, transformers and other equipment. After a fuse has melted, it can be exchanged for a new fuse via a fuse lid at an end of a canister in which the fuse is housed.

KR 10-0918921 discloses a power fuse structure of a gas insulated switchgear is provided to allow a user to change a power fuse by using a slot formed on the exterior of an insulating cap.

However, after a fault (when the old fuse has melted or exploded) there may be an overpressure in the fuse canister, in which case the fuse lid, as well as gas and dust, may shoot out when the fuse lid is opened, endangering the operator and polluting the surroundings.

### SUMMARY

It is an objective of the present invention to provide a handle of a fuse lid which reduces the problem of an overpressure in the fuse canister when opening the same by removing the fuse lid.

According to an aspect of the present invention, there is provided a handle of a fuse lid for sealing an opening in a canister for an electrical fuse according to the features of independent claim 1. Further embodiments are defined in the dependent claims 2-4.

According to another aspect of the present invention, there is provided a fuse arrangement comprising a canister for an electrical fuse; a fuse lid for sealing an opening in the canister; and an embodiment of the handle of the present invention.

According to another aspect of the present invention, there is provided an electrical switchgear comprising at least one electrical switch configured for breaking a current in a conductor; and a respective fuse arrangement of the present invention connected in series with each of the at least one electrical switch.

Further embodiments of the fuse arrangement and electrical switchgear are defined in the dependent claims 6-9 and 11-12, respectively.

According to another aspect of the present invention, there is provided a method of opening a canister for an electrical fuse by removing a fuse lid which is gas tightly sealing an opening of the canister according to the features of independent claim 13.

By the second pivot position, an intermediate venting of any overpressure from within the canister is enabled without the risk of the fuse lid shooting/popping out. Instead, the fuse lid is held in place by the slot in the handle being self-lockingly in mesh with the pin fastened to the canister while allowing any gas to be vented from within the canister in a controlled manner. That the slot is self-lockingly in mesh with the pin implies that, when the fuse lid is pressed axially away from the end of the canister, e.g. by an overpressure in the canister, the fuse lid is prevented from axial movement without application of external force, e.g. by an operator who thus does not need to hold the handle.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1a is a schematic side view, looking through the tank wall at said side, of a switchgear, in accordance with some embodiments of the present invention.
Fig 1b is a schematic front view, looking through the front tank wall of the switchgear of figure 1a, in accordance with some embodiments of the present invention.
Fig 2a is a schematic side view of a fuse arrangement with the handle in its first pivot position, in accordance with some embodiments of the present invention.
Fig 2b is a schematic top view of a fuse arrangement with the handle in its first pivot position, the handle having two reflection symmetrical lateral portions, in accordance with some embodiments of the present invention.
Fig 2c is a schematic side view of a fuse arrangement with the handle in its second pivot position, in accordance with some embodiments of the present invention.
Fig 2d is a schematic side view of a fuse arrangement with the fuse lid and the handle thereof moved axially to enable transition to the third pivot position, in accordance with some embodiments of the present invention.
Fig 2e is a schematic side view of a fuse arrangement where a leaver is added to the handle, in accordance with some embodiments of the present invention.
Fig 2f is a schematic side view of a fuse arrangement with the handle in its third pivot position, in accordance with some embodiments of the present invention.
Fig 3 is a schematic flow chart of an embodiment of the method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

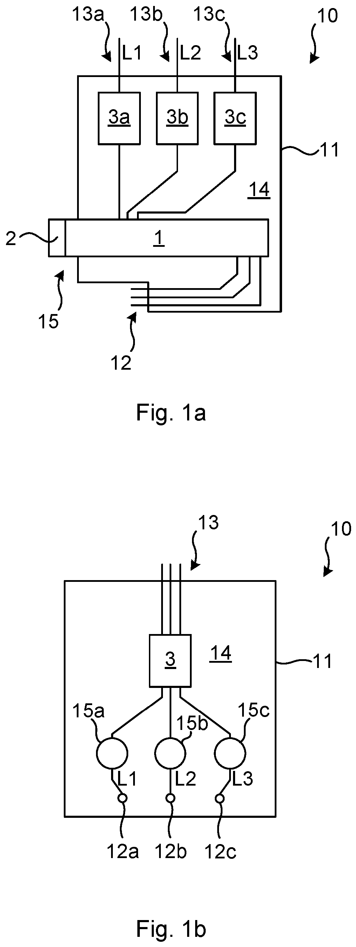

Figures 1a and 1b illustrate a switchgear 10, in this case a three-phase switchgear for MV or HV Alternating Current (AC), e.g. with a line voltage of at least 1 kV. At least one line L is able to conduct a current through the switchgear 10. A respective electrical switch 3 is arranged to make or break the current in each line L. A fuse arrangement 15 is connected in series with each switch 3. The thus parallel connected fuse arrangements 15 may be regarded as a switch fuse disconnector or fuse panel, especially when loaded with respective fuses. Each fuse arrangement 15 comprises an elongated canister 1 for holding an electrical fuse. The canister 1 has an opening at one of its ends, which opening can be gas tightly sealed by a fuse lid 2. In the example of figures 1a and 1b, a respective fuse arrangement 15a, 15b and 15c is galvanically connected in series with an electrical switch 3a, 3b and 3c along each of the three lines L1, L2 and L3, one per phase.

The switches 3 and, at least partly, the fuse arrangements 15 may be housed in a tank 11 of the switchgear 10. Each of the lines L may pass through a wall of the tank 11 via a first bushing 12, here first bushings 12a, 12b and 12c, to connect to the fuse arrangement 15 within the tank 11. Similarly, additionally or alternatively, each of the lines L may pass through a wall of the tank 11 via a second bushing 13, here second bushings 13a, 13b and 13c, to connect to the switch 3 within the tank 11. Alternatively, in some other embodiments, a line L may connect to a line of a neighbouring panel, e.g. fuse, load break switch, direct cable connection or vacuum circuit breaker panel, within the same tank 11, without the need for a second bushing 13. For easy access to the fuse lid 2, for facilitating opening the canister 1 e.g. when changing a fuse therein, the fuse lid 2 may be arranged on the outside of the tank 11, the end of the canister 1 typically extending through a wall of the tank 11.

The switchgear 10 may be gas insulated, with the tank 11 being filled with an electrically insulating gas 14, e.g. air, other gas mixture or SF6. The electrically insulating gas 14 may for example comprise at least one background gas component selected from the group consisting of CO2, O2, N2, H2, air, N2O, in a mixture with a hydrocarbon or an organo fluorine compound. For example, the electrically insulating gas may comprise dry air or technical air. The electrically insulating gas may in particular comprise an organofluorine compound selected from the group comprising of: a fluoroether, an oxirane, a fluoramine, a fluoroketone, a fluoroolefin, a fluoronitrile, and mixtures and/or decomposition products thereof. In particular, the cooling gas may comprise as a hydrocarbon at least CH4, a perfluorinated and/or partially hydrogenated organofluorine compound, and mixtures thereof. The organofluorine compound is preferably selected from the group comprising/consisting of: a fluorocarbon, a fluoroether, a fluoroamine, a fluoronitrile, and a fluoroketone; and preferably is a fluoroketone and/or a fluoroether, more preferably a perfluoroketone and/or a hydro fluoroether, more preferably a perfluoroketone having from 4 to 12 carbon atoms and even more preferably a perfluoroketone having 4, 5 or 6 carbon atoms. In particular, the perfluoroketone is or comprises at least one of: C2F5C(O)CF(CF3)2 or dodecafiuoro-2-methylpentan-3-one, and CF3C(O)CF(CF3)2 or decafluoro-3-methylbutan-2-one. The electrically insulating gas preferably comprises the fluoroketone mixed with air or an air component such as N2, O2, and/or CO2. However, in some embodiments, the electrically insulating gas is preferably SF6. The electrically insulating gas 14 may be at an overpressure within the range of 0.1-1 bar, preferably within the range of 0.3-0.6 bar, e.g. 0.4-0.5 bar, compared with the ambient (typically atmospheric) pressure. Typically, the inside of each canister 1, even when sealed by the fuse lid 2, contains air at ambient (atmospheric) pressure during normal operation of the switchgear 10. Thus, the inside of the canister 1 is normally not in communication with the electrically insulating gas 14 in the tank 11. However, during some kind of fault, pressurized gas 14 may leak into the canister 1, resulting in an overpressure within the canister when sealed by its fuse lid 2. This may happen regardless of whether there is a fuse in the canister 1 or not.

In some embodiments, earthing (grounding) of the lines L, typically of each line L, is enabled, for instance by mans of an upstream earthing switch, e.g. arranged on the line L between the electrical switch 3 and the canister 1 or integrated in the electrical switch 3, and/or by means of a downstream earthing switch, e.g. arranged on the line L between the canister 1 and the first bushing 12.

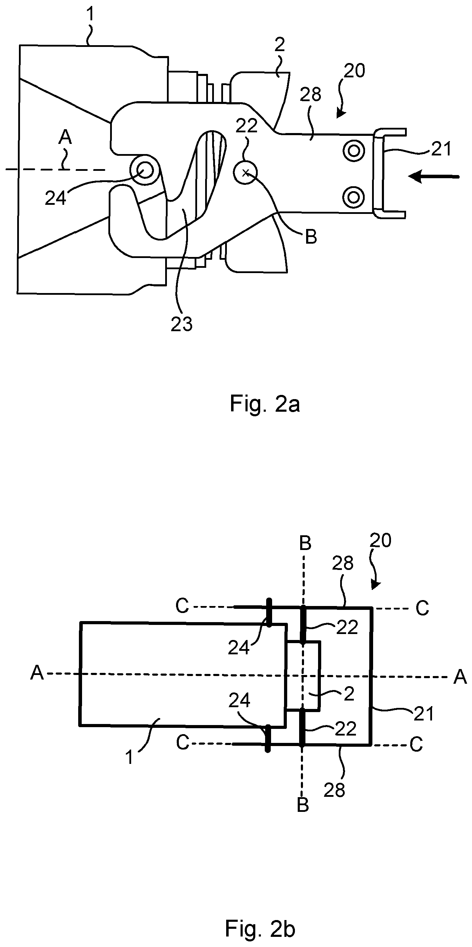

Figure 2a illustrates a handle 20 of the fuse lid 2 as it interacts with a pin 24 immovably attached to the canister 2. As mentioned above, the function of the fuse lid 2 is to seal an opening at an end of the canister 1. The canister 1 is elongated, e.g. right circular cylindrical, having a (central) longitudinal axis A. The opening which is sealed by the fuse lid 2 is at an axial end of the canister. By sealing the opening, preferably gas tightly, a fuse in the canister 1 is separated from the ambient atmosphere. The fuse lid 2 seals the canister opening by being pushed against the opening and held in place by means of the handle 20.

The handle 20 is pivotably attached to the fuse lid 2 via a joint 22, typically a revolute joint, allowing the handle to pivot about a rotational axis B (perpendicular to the plane of the figure 2a) defined by the joint. By being attached at the joint 22, the handle 20 moves together with the fuse lid 2 at the joint. The handle 20 comprises a grip portion (21) configured to be grabbed by an operator, typically a human operator. The handle 20 also comprises a slot 23 arranged to be in mesh with the pin 24. In this example, the slot goes through the material of the handle 20, but alternatively, the slot may be in the form of a groove in the material. If regarding the pin 24 as stationary, the pin moves along the slot 23 by axial (i.e. in parallel with the longitudinal axis A) movement of the fuse lid 2 (and thus of the handle 20) and/or by the handle 20 pivoting about the rotational axis B.

The handle 20 is preferably of a rigid material, typically metallic, whereby the grip portion 21, the joint 22 and the slot 23 are in a fixed relationship to each other.

The slot 23, as well as the joint 22, may be arranged in a (typically flat/planar) lateral portion 28 of the handle 20. The lateral portion 28 may be configured to extend longitudinally partially overlapping the canister 1 when the slot 23 is in mesh with the pin 24. The grip portion 21 may be arranged at an angle, e.g. of 90°, to the lateral portion 28, to facilitate gripping by an operator.

Figure 2a illustrates the handle 20 in its first (open) pivot position, when the pin 24 is able to enter the slot 23 as the handle and fuse lid 2 are pushed axially towards the canister 1, as illustrated by the straight horizontal arrow in the figure. The same pivot position allows the pin 24 to exit the slot 23 if the handle and fuse lid are pulled axially away from the canister. Typically, the joint 22 is axially aligned with the pin 24 during sealing and opening of the canister 1 (i.e. during axial movement of the fuse lid 2). Preferably, as shown in figure 2a, the lateral portion 28 has a longitudinal extension parallel to the longitudinal axis A of the canister at the first pivot position.

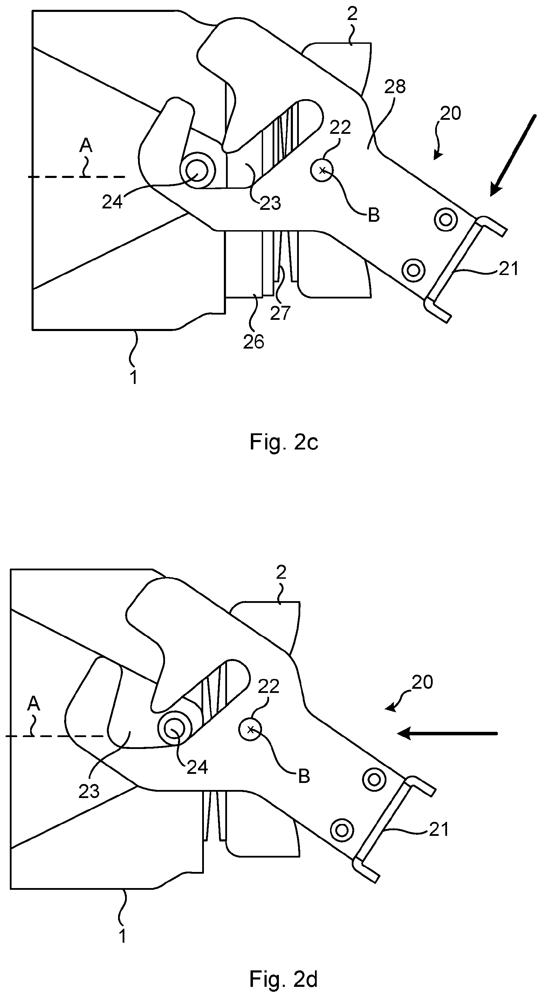

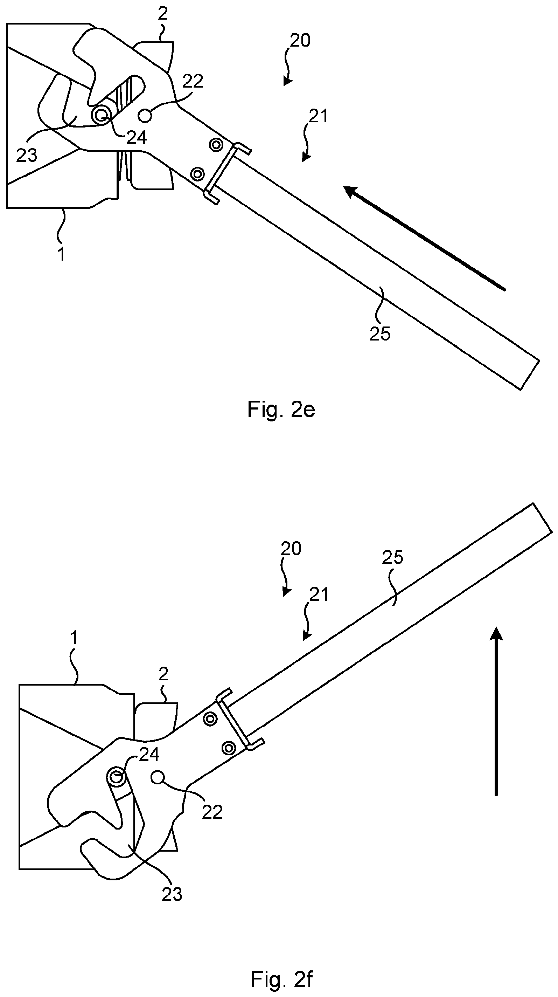

Figure 2b is a more schematic illustration of a handle 20 of a fuse lid 2 interacting with a canister 1 but shown from above. As can be seen, the handle 20 of this example comprises two lateral portions 28, extending on either side (diametrically opposite sides) of the canister 2, each in mesh with a pin 24 as described above. Each of the lateral portions 28 may be as described in relation to figure 2a, i.e. each being attached to the fuse lid 2 via a joint 22 and each having a slot 23 configured to be in mesh with the respective pin 24 of the canister 1. Each lateral portion 28 may lie in a plane C, parallel to each other and parallel to the longitudinal axis A, but perpendicular to the rotational axis B. The two lateral portions 28 may be reflection symmetrical to each other, with the central longitudinal axis A lying in the plane of symmetry. Typically, the two lateral portions 28 are connected fixedly to each other via the grip portion 21. By using two lateral portions 28, a more balanced force may be applied to the fuse lid when inserting it or removing it from the canister opening, as well as while holding the fuse lid in place at the second or third pivot positions. Also figures 2a, 2c, 2d, 2e and 2f may be showing a handle 20 with two lateral portions 28, but where one is obscured by the other.

Figure 2c illustrates the handle 20 in the second (venting) pivot position, where the fuse lid 2 is not completely sealing the opening of the canister 1 but allows gas to pass into or out of the canister, while the fuse lid 2, by the handle being in the second pivot position, is prevented from moving axially away from the canister. This is achieved by the pin 24 being self-lockingly located in the slot 23, e.g. in a first nook of the slot as in figure 2c. Thus, if axial pressure, away from the canister, is applied to the fuse lid in the second position, e.g. by an overpressure in the canister, the pin remains in the first nook without any external force (e.g. by an operator gripping the grip portion of the handle). Rather, to force the pin 24 to travel in either direction along the slot 23, the handle has to be forced to pivot by an external force. In the example of figure 2c, the straight arrow illustrates a direction of force applied to the grip portion 21 to pivot the handle about the rotational axis B from the first pivot position to the second pivot position. To instead pivot the handle from the third pivot position to the second pivot position, the handle should instead be rotated in the opposite direction.

As is shown in figure 2c, the fuse lid 2 may comprise a sealing portion 26, e.g. of silicone, which can seal the canister opening by contacting, typically being pressed against, a border of the canister around the opening, e.g. by being pressed against or into the opening. The sealing portion 26 preferably has a conical shape, tapering towards the canister, to allow the narrower end of the cone to enter the opening as the fuse lid is axially moved towards the canister, and then seal the opening, preferably gas tightly, as a wider part of the code gets wedged in the opening. The conical shape may conveniently be a frustoconical shape. The line of symmetry of the (typically right circular) cone may be aligned with the central longitudinal axis A while the slot 23 is in mesh with the pin 24, i.e. in each of the three pivot positions of the handle 20.

Also shown in figure 2c is an optional spring element 27, e.g. comprising at least one, for instance two concentrically arranged, spring washer(s), conveniently positioned axially between the rotational axis B of the joint(s) 22 and the sealing portion 26, for applying an axial pressure pressing the sealing portion towards the canister, especially in the third pivot position (to keep the seal gas tight).

Figure 2d shows how, by the design of the slot 23 in this example, an external axial force towards the canister 2 may need to be applied to the handle 20, or otherwise to the fuse lid 2, in order to position the pin 24 in the slot 23 in preparation for pivoting the handle to its third (closed) position. In case of instead pivoting the handle 20 from its third position to its second position, the axial movement of the fuse lid is reversed and may be effected (performed) by the possible overpressure in the canister.

Figure 2e illustrates that an extra, preferably detachable, lever 25, e.g. in the form of a rod, may be added to the grip portion 21 in order to facilitate pivoting the handle 20 to the third position, e.g. for enabling doing this by hand by a human operator.

Figure 2f shows the handle 20 in its third position, where the fuse lid is held in a position where it seals, preferably gas tightly, the opening of the canister 1. The third position is typically reached by pivoting the handle in the opposite direction about the rotational axis B to when the second position is reached from the first position. Again, the fuse lid is again held in place by the pin 24 being self-lockingly located in the slot 23, in another location than the self-locking location of the second pivot position. In the example of figure 2f, the self-locking location of the pin 24 at the third pivot position of the handle 20 is at an end of the slot 23. Alternatively, the self-locking location of the pin 24 at the third pivot position of the handle 20 may be at a second nook in the slot 23. Since the fuse lid 2 is in the third position of the handle 20 pushed against the canister 1, there is a force exerted on the fuse lid axially away from the canister, and since the pin 24 is self-lockingly located in the slot 23, external force is needed to pivot the handle back to the second position. To rotate the handle from the third pivot position back to the second pivot position, a force has to be applied which rotates the handle in a direction about the rotation axis B which is opposite when rotating the handle from the second position to the third position.

Alternatively, the slot 23 may be provided with a notch to further keep the pin 24 at the self-locking location of the third pivot position.

It should be noted that the slot 23 of figures 2 is only an example. It could e.g. be completely upside down, in which case all rotations are in opposite directions as to what is described above and in the figures.

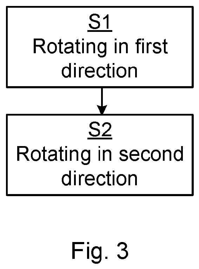

Figure 3 is a flow chart illustrating an embodiment of the method of the present disclosure. The method is for opening a canister 1 for an electrical fuse by removing a fuse lid 2 gas tightly sealing an opening of the canister, by means of a handle 20 as discussed herein. The method comprises, while the pin 24 is positioned in the slot 23, rotating S1 the handle 20 in a first direction about the rotational axis B from a third pivot position in which the pin 24 is self-lockingly located in the slot 23 such that longitudinal movement of the fuse lid 2 in a direction away from the canister 1 is prevented while gas tightly sealing the opening of the canister, to a second pivot position in which the pin 24 is self-lockingly located in the slot 23 such that longitudinal movement of the fuse lid 2 in a direction away from the canister 1 is prevented while allowing gas to vent through the opening of the canister. Then, the method also comprises, while the pin 24 is still positioned in the slot 23, rotating S2 the handle 20 in a second direction, opposite to the first direction, about the rotational axis B from the second pivot position to a first pivot position in which the pin 24 can exit the slot 23 while the fuse lid 2 is moved away from the canister 1.

In a general embodiment of the present disclosure, the handle 20 comprises a grip portion 21; a joint 22 via which the handle is pivotably attached to the fuse lid; and a slot 23 arranged to be in mesh with the pin 24 immovably attached to the canister 1. In a first pivot position of the handle, the pin can enter or exit the slot. In a second pivot position of the handle, the pin is self-lockingly located in the slot while allowing gas to vent from the canister. In a third pivot position of the handle, the pin is self-lockingly located in the slot while gas tightly sealing the canister.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A handle (20) of a fuse lid (2) for sealing an opening in a canister (1) for an electrical fuse, the handle comprising:
a grip portion (21) configured to be grabbed by an operator;
a joint (22) via which the handle (20) is pivotably attached to the fuse lid (2),
allowing the handle to pivot about a rotational axis (B) defined by the joint; and
a slot (23) arranged to be in mesh with a pin (24) immovably attached to the canister (1), such that:
in a first pivot position of the handle (20), the pin (24) can enter or exit the slot (23) while the fuse lid (2) is moved along a longitudinal axis (A) of the canister (1);
in a second pivot position of the handle (20), the pin (24) is self-lockingly located in a first nook of the slot (23) such that longitudinal movement of the fuse lid (2) in a direction away from the canister (1) is prevented while allowing gas to vent through the opening of the canister;
in a third pivot position of the handle (20), the pin (24) is self-lockingly located in an end, or a second nook, of the slot (23) such that longitudinal movement of the fuse lid (2) in a direction away from the canister (1) is prevented while gas tightly sealing the opening of the canister.

2. The handle of any preceding claim, wherein the joint (22) is a revolute joint.

3. The handle of any preceding claim, wherein the joint (22) and the slot (23) are arranged in a first lateral portion (28) of the handle (20), configured to extend longitudinally partially overlapping the canister (1) when the slot (23) is in mesh with the pin (24).

4. The handle of claim 3, wherein the handle further comprises a second lateral portion (28), connected to the first lateral portion via the grip portion (21), wherein the second lateral portion is reflection symmetrical to the first lateral portion (28) and configured to extend longitudinally partially overlapping the canister (1) when the slot (23) is in mesh with the pin (24) on an opposite side of the canister from the first lateral portion.

5. A fuse arrangement (15) comprising:
a canister (1) for an electrical fuse;
a fuse lid (2) for sealing an opening in the canister (1); and
the handle (20) of any preceding claim.

6. The fuse arrangement of claim 5, wherein the fuse lid (2) comprises a sealing portion (26) configured for being pressed against a border around the opening.

7. The fuse arrangement of claim 6, wherein the sealing portion (26) has a conical shape, preferably frustoconical shape, with a line of symmetry configured to be aligned with the longitudinal axis (A) when the slot (23) is in mesh with the pin (24).

8. The fuse arrangement of claim 6 or 7, wherein the fuse lid (2) comprises a spring element (27) configured to push the sealing portion (26) towards the canister (1) along the longitudinal axis (A) when the handle (20) is in its third position.

9. The fuse arrangement of claim 8, wherein the spring element (27) comprises at least one spring washer.

10. An electrical switchgear (10) comprising:
at least one electrical switch (3) configured for breaking a current in a conductor (L); and
a respective fuse arrangement (15) of any claim 5 - 9 connected in series with each of the at least one electrical switch (3).

11. The electrical switchgear of claim 10, wherein the electrical switchgear (10) is gas insulated and further comprises a tank (11) containing an electrically insulating gas (14) and enclosing the at least one electrical switch as well as at least partly enclosing the canister (1) of the respective fuse arrangement (15).

12. The electrical switchgear of claim 11, wherein a gas pressure within the tank (11), outside of the canister (1), is higher than a gas pressure within the canister.

13. A method of opening a canister (1) for an electrical fuse by removing a fuse lid (2) gas tightly sealing an opening of the canister, wherein a handle (20) of the fuse lid comprises:
a grip portion (21) configured to be grabbed by an operator;
a joint (22) via which the handle (20) is pivotably attached to the fuse lid (2),
allowing the handle to pivot about a rotational axis (B) defined by the joint; and
a slot (23) arranged to be in mesh with a pin (24) immovably attached to the canister (1);
the method comprising:
while the pin (24) is positioned in the slot (23), rotating (S1) the handle (20) in a first direction about the rotational axis (B) from a third pivot position in which the pin (24) is self-lockingly located in an end, or a second nook, of the slot (23) such that longitudinal movement of the fuse lid (2) in a direction away from the canister (1) is prevented while gas tightly sealing the opening of the canister, to a second pivot position in which the pin (24) is self-lockingly located in a first nook of the slot (23) such that longitudinal movement of the fuse lid (2) in a direction away from the canister (1) is prevented while allowing gas to vent through the opening of the canister; and
while the pin (24) is positioned in the slot (23), rotating (S2) the handle (20) in a second direction, opposite to the first direction, about the rotational axis (B) from the second pivot position to a first pivot position in which the pin (24) can exit the slot (23) while the fuse lid (2) is moved away from the canister (1) along a longitudinal axis (A) of the canister.

## Patentansprüche

1. Griff (20) eines Sicherungsdeckels (2) zum Verschließen einer Öffnung in einem Behälter (1) für eine elektrische Sicherung, wobei der Griff Folgendes umfasst:
einen Griffabschnitt (21), der dazu ausgelegt ist, von einem Bediener ergriffen zu werden;
ein Gelenk (22), über das der Griff (20) schwenkbar an dem Sicherungsdeckel (2) befestigt ist, wodurch der Griff um eine Drehachse (B) schwenken kann, die durch das Gelenk definiert ist; und einen Schlitz (23), der so angeordnet ist, dass er mit einem Stift (24) in Eingriff steht, der unbeweglich an dem Behälter (1) befestigt ist, so dass:
in einer ersten Schwenkposition des Griffs (20) der Stift (24) in den Schlitz (23) eintreten oder aus diesem austreten kann, während der Sicherungsdeckel (2) entlang einer Längsachse (A) des Behälters (1) bewegt wird;
in einer zweiten Schwenkposition des Griffs (20) sich der Stift (24) selbsthemmend in einer ersten Nase des Schlitzes (23) befindet, so dass eine Längsbewegung des Sicherungsdeckels (2) in einer Richtung weg von dem Behälter (1) verhindert wird, während Gas durch die Öffnung des Behälters entlüften kann;
in einer dritten Schwenkposition des Griffs (20) sich der Stift (24) selbsthemmend in einem Ende oder einer zweiten Nase des Schlitzes (23) befindet, so dass eine Längsbewegung des Sicherungsdeckels (2) in einer Richtung weg vom Behälter (1) verhindert wird, während die Öffnung des Behälters gasdicht verschlossen wird.

2. Griff nach einem der vorhergehenden Ansprüche, wobei das Gelenk (22) ein Drehgelenk ist.

3. Griff nach einem der vorhergehenden Ansprüche, wobei das Gelenk (22) und der Schlitz (23) in einem ersten seitlichen Abschnitt (28) des Griffs (20) angeordnet sind, der dazu ausgelegt ist, sich in Längsrichtung teilweise überlappend mit dem Behälter (1) zu erstrecken, wenn der Schlitz (23) in Eingriff mit dem Stift (24) ist.

4. Griff nach Anspruch 3,
wobei der Griff ferner einen zweiten lateralen Abschnitt (28) umfasst, der über den Griffabschnitt (21) mit dem ersten lateralen Abschnitt verbunden ist, wobei der zweite laterale Abschnitt reflektionssymmetrisch zu dem ersten lateralen Abschnitt (28) ist und dazu ausgelegt ist, sich in Längsrichtung teilweise überlappend mit dem Behälter (1) zu erstrecken, wenn der Schlitz (23) auf einer gegenüberliegenden Seite des Behälters von dem ersten lateralen Abschnitt in Eingriff mit dem Stift (24) ist.

5. Sicherungsanordnung (15), Folgendes umfassend:
einen Behälter (1) für eine elektrische Sicherung;
einen Sicherungsdeckel (2) zum Verschließen einer Öffnung im Behälter (1) und
den Griff (20) nach einem der vorhergehenden Ansprüche.

6. Sicherungsanordnung nach Anspruch 5,
wobei der Sicherungsdeckel (2) einen Verschlussabschnitt (26) umfasst, der dazu ausgelegt ist, gegen einen Rand um die Öffnung herum gedrückt zu werden.

7. Sicherungsanordnung nach Anspruch 6,
wobei der Verschlussabschnitt (26) eine konische Form, vorzugsweise eine kegelstumpfförmige Form, mit einer Symmetrielinie aufweist, die dazu ausgelegt ist, mit der Längsachse (A) ausgerichtet zu sein, wenn der Schlitz (23) in Eingriff mit dem Stift (24) ist.

8. Sicherungsanordnung nach Anspruch 6 oder 7,
wobei der Sicherungsdeckel (2) ein Federelement (27) umfasst, das dazu ausgelegt ist, den Verschlussabschnitt (26) entlang der Längsachse (A) in Richtung des Behälters (1) zu drücken, wenn sich der Griff (20) in seiner dritten Position befindet.

9. Sicherungsanordnung nach Anspruch 8,
wobei das Federelement (27) mindestens eine Federscheibe umfasst.

10. Elektrische Schaltanlage (10), Folgendes umfassend:
mindestens einen elektrischen Schalter (3), der zum Unterbrechen eines Stroms in einem Leiter (L) ausgelegt ist; und
eine jeweilige Sicherungsanordnung (15) nach einem der Ansprüche 5-9, die mit jedem des mindestens einen elektrischen Schalters (3) in Reihe geschaltet ist.

11. Elektrische Schaltanlage nach Anspruch 10,
wobei die elektrische Schaltanlage (10) gasisoliert ist und ferner einen Tank (11) umfasst, der ein elektrisch isolierendes Gas (14) enthält und den mindestens einen elektrischen Schalter umschließt sowie den Behälter (1) der jeweiligen Sicherungsanordnung (15) zumindest teilweise umschließt.

12. Elektrische Schaltanlage nach Anspruch 11,
wobei der Gasdruck innerhalb des Tanks (11), außerhalb des Behälters (1), höher als der Gasdruck innerhalb des Behälters ist.

13. Verfahren zum Öffnen eines Behälters (1) für eine elektrische Sicherung durch Entfernen eines Sicherungsdeckels (2), der eine Öffnung des Behälters gasdicht verschließt, wobei ein Griff (20) des Sicherungsdeckels Folgendes umfasst:
einen Griffabschnitt (21), der dazu ausgelegt ist, von einem Bediener ergriffen zu werden;
ein Gelenk (22), über das der Griff (20) schwenkbar am Sicherungsdeckel (2) befestigt ist, wodurch der Griff um eine durch das Gelenk definierte Drehachse (B) schwenkbar ist; und
einen Schlitz (23), der so angeordnet ist, dass er mit einem Stift (24) in Eingriff steht, der unbeweglich am Behälter (1) befestigt ist;
wobei das Verfahren Folgendes umfasst:
während der Stift (24) in dem Schlitz (23) positioniert ist, Drehen (S1) des Griffs (20) in einer ersten Richtung um die Drehachse (B) aus einer dritten Schwenkposition, in der der Stift (24) selbsthemmend in einem Ende oder einer zweiten Nase des Schlitzes (23) angeordnet ist, so dass eine Längsbewegung des Sicherungsdeckels (2) in einer Richtung weg von dem Behälter (1) verhindert wird, während die Öffnung des Behälters gasdicht verschlossen wird, in eine zweite Schwenkposition, in der sich der Stift (24) selbsthemmend in einer ersten Nase des Schlitzes (23) befindet, so dass eine Längsbewegung des Sicherungsdeckels (2) in einer Richtung weg von dem Behälter (1) verhindert wird, während Gas durch die Öffnung des Behälters entlüften kann; und
während der Stift (24) in dem Schlitz (23) positioniert ist, Drehen (S2) des Griffs (20) in einer zweiten Richtung, die der ersten Richtung entgegengesetzt ist, um die Drehachse (B) von der zweiten Schwenkposition in eine erste Schwenkposition, in der der Stift (24) aus dem Schlitz (23) austreten kann, während der Sicherungsdeckel (2) entlang einer Längsachse (A) des Behälters vom Behälter (1) wegbewegt wird.

## Revendications

1. Poignée (20) d'un couvercle de fusible (2) servant à fermer hermétiquement une ouverture dans une cartouche (1) pour fusible électrique, la poignée comprenant :
une partie de préhension (21) conçue pour être saisie par un opérateur ;
un joint (22) par lequel la poignée (20) est attachée de manière pivotante au couvercle de fusible (2), permettant à la poignée de pivoter autour d'un axe de rotation (B) défini par le joint ; et une fente (23) conçue pour être mise en prise avec une broche (24) attachée de manière fixe à la cartouche (1), de telle sorte que :
dans une première position de pivotement de la poignée (20), la broche (24) peut entrer dans la fente (23) ou sortir de celle-ci tandis que le couvercle de fusible (2) est déplacé le long d'un axe longitudinal (A) de la cartouche (1) ;
dans une deuxième position de pivotement de la poignée (20), la broche (24) est placée de manière autobloquante dans un premier renfoncement de la fente (23) de façon à empêcher un mouvement longitudinal du couvercle de fusible (2) dans une direction l'éloignant de la cartouche (1) tout en permettant une évacuation du gaz par l'ouverture de la cartouche ;
dans une troisième position de pivotement de la poignée (20), la broche (24) est placée de manière autobloquante au niveau d'une extrémité, ou dans un second renfoncement, de la fente (23) de façon à empêcher un mouvement longitudinal du couvercle de fusible (2) dans une direction l'éloignant de la cartouche (1) tout en fermant de manière hermétique au gaz l'ouverture de la cartouche.

2. Poignée selon l'une quelconque des revendications précédentes, dans laquelle le joint (22) est un joint rotoïde.

3. Poignée selon l'une quelconque des revendications précédentes, dans laquelle le joint (22) et la fente (23) sont placés dans une première partie latérale (28) de la poignée (20), conçue pour s'étendre longitudinalement en superposition partielle avec la cartouche (1) lorsque la fente (23) est en prise avec la broche (24).

4. Poignée selon la revendication 3,
la poignée comprenant, en outre, une seconde partie latérale (28), reliée à la première partie latérale par la partie de préhension (21), la seconde partie latérale étant en symétrie spéculaire avec la première partie latérale (28) et conçue pour s'étendre longitudinalement en superposition partielle avec la cartouche (1) lorsque la fente (23) est en prise avec la broche (24) sur un côté opposé de la cartouche relativement à la première partie latérale.

5. Structure de fusible (15) comprenant :
une cartouche (1) pour fusible électrique ;
un couvercle de fusible (2) servant à fermer hermétiquement une ouverture dans la cartouche (1) ; et
la poignée (20) selon l'une quelconque des revendications précédentes.

6. Structure de fusible selon la revendication 5, dans laquelle le couvercle de fusible (2) comprend une partie d'étanchéité (26) conçue pour être pressée contre une bordure autour de l'ouverture.

7. Structure de fusible selon la revendication 6, dans laquelle la partie d'étanchéité (26) présente une forme conique, de préférence tronconique, avec une ligne de symétrie conçue pour être alignée sur l'axe longitudinal (A) lorsque la fente (23) est en prise avec la broche (24).

8. Structure de fusible selon la revendication 6 ou 7, dans laquelle le couvercle de fusible (2) comprend un élément élastique (27) conçu pour pousser la partie d'étanchéité (26) vers la cartouche (1) le long de l'axe longitudinal (A) lorsque la poignée (20) est dans sa troisième position.

9. Structure de fusible selon la revendication 8, dans laquelle l'élément élastique (27) comprend au moins une rondelle élastique.

10. Appareillage de commutation électrique (10) comprenant :
au moins un interrupteur électrique (3) conçu pour couper un courant dans un conducteur (L) ; et
une structure de fusible (15) respective selon l'une quelconque des revendications 5 à 9, reliée en série avec l'interrupteur ou chacun des interrupteurs électriques (3).

11. Appareillage de commutation électrique selon la revendication 10,
l'appareillage de commutation électrique (10) étant isolé au gaz et comprenant, en outre, un réservoir (11) contenant un gaz électriquement isolant (14) et renfermant l'au moins un interrupteur électrique, et enveloppant également au moins partiellement la cartouche (1) de la structure de fusible (15) respective.

12. Appareillage de commutation électrique selon la revendication 11,
dans lequel une pression de gaz à l'intérieur du réservoir (11), à l'extérieur de la cartouche (1), est supérieure à une pression de gaz à l'intérieur de la cartouche.

13. Procédé d'ouverture d'une cartouche (1) pour fusible électrique en enlevant un couvercle de fusible (2) fermant de manière hermétique au gaz une ouverture de la cartouche, une poignée (20) du couvercle de fusible comprenant :
une partie de préhension (21) conçue pour être saisie par un opérateur ;
un joint (22) par lequel la poignée (20) est attachée de manière pivotante au couvercle de fusible (2), permettant à la poignée de pivoter autour d'un axe de rotation (B) défini par le joint ; et
une fente (23) conçue pour être mise en prise avec une broche (24) attachée de manière fixe à la cartouche (1) ;
le procédé comprenant :
tandis que la broche (24) est positionnée dans la fente (23), appliquer une rotation (S1) à la poignée (20) dans un premier sens autour de l'axe de rotation (B), d'une troisième position de pivotement, dans laquelle la broche (24) est placée de manière auto-bloquante au niveau d'une extrémité, ou dans un second renfoncement, de la fente (23) de façon à empêcher un mouvement longitudinal du couvercle de fusible (2) dans une direction l'éloignant de la cartouche (1) tout en fermant de manière hermétique au gaz l'ouverture de la cartouche, à une deuxième position de pivotement, dans laquelle la broche (24) est placée de manière autobloquante dans un premier renfoncement de la fente (23) de façon à empêcher un mouvement longitudinal du couvercle de fusible (2) dans une direction l'éloignant de la cartouche (1) tout en permettant une évacuation du gaz par l'ouverture de la cartouche ; et
tandis que la broche (24) est positionnée dans la fente (23), appliquer une rotation (S2) à la poignée (20) dans un second sens, opposé au premier sens, autour de l'axe de rotation (B), de la deuxième position de pivotement à une première position de pivotement, dans laquelle la broche (24) peut sortir de la fente (23) tandis que le couvercle de fusible (2) est éloigné de la cartouche (1) le long d'un axe longitudinal (A) de la cartouche.
